# EUROPEAN PATENT APPLICATION

(11) **EP 3 355 014 A1**
(43) Date of publication of application: **01.08.2018**
(21) Application number: 17200755.1
(22) Date of filing: 09.11.2017
(51) Int. Cl.: F25J 1/00, F25J 1/02

(54) **BOIL-OFF GAS RECOVERY SYSTEM**

(30) Priority: 30.01.2017 JP 2017014519
(71) Applicant: Kabushiki Kaisha Kobe Seiko Sho (Kobe Steel, Ltd.), Kobe-shi, Hyogo, 651-8585 (JP)
(72) Inventor: TEZUKA, Satoshi, Takasago-shi,, Hyogo 676-8670 (JP); SEYAMA, Katsuhiro, Takasago-shi,, Hyogo 676-8670 (JP); NAGURA, Kenji, Takasago-shi,, Hyogo 676-8670 (JP)
(74) Representative: TBK

(57) **Abstract**

A boil-off gas recovery system 1 includes a tank 2 storing liquefied gas, an oil supply type compressor 3b for compressing boil-off gas generated by partial evaporation of the liquefied gas in the tank 2, and a reliquefying system 9 for liquefying the boil-off gas compressed by the oil supply type compressor 3b and returning the liquefied gas that has been liquefied to the tank 2. The reliquefying system 9 includes a heat exchanger for oil constituent condensation 11 for cooling down the boil-off gas to a temperature equal to or lower than a condensation temperature of an oil constituent contained in the boil-off gas, a separator 14 for separating the oil constituent condensed by the heat exchanger for oil constituent condensation 11 from the boil-off gas, and a reliquefying portion for liquefying the boil-off gas from which the oil constituent is separated.

## Description

### BACKGROUND OF THE INVENTION

### (FIELD OF THE INVENTION)

The present invention relates to a boil-off gas recovery system for recovering boil-off gas generated in a tank storing liquefied gas.

### (DESCRIPTION OF THE RELATED ART)

In a liquefied natural gas carrying vessel, boil-off gas is generated in a tank storing the liquefied natural gas. Such boil-off gas is effectively utilized as fuel for an engine, a steam boiler, and a generator in the vessel, and/or returned to the tank after being reliquefied. As a technique for reliquefying the boil-off gas generated in the tank and returning it to the tank, a boil-off gas recovery system described in JP-2015-158263 A has been known.

In the boil-off gas recovery system described in JP-2015-158263 A, the boil-off gas generated in the tank is compressed by an oil supply type compressor to reliquefy a part of the boil-off gas, and the reliquefied boil-off gas is returned to the tank. In this process, the boil-off gas compressed by the oil supply type compressor contains an oil constituent derived from lubricating oil in the oil supply type compressor, thus the oil constituent may be mixed into the tank together with the boil-off gas. For this reason, the boil-off gas recovery system in JP·2013-158263 A includes a filter for removing the oil constituent contained in the boil-off gas.

However, although the boil-off gas recovery system of JP-2015-158263 A can capture the oil constituent in a liquid state with the filter, it fails to capture the oil constituent in a gas state with the filter. Thus, the oil constituent contained in the boil-off gas cannot be sufficiently removed by this system. As a result, the boil-off gas recovery system of JP-2015-158263 A has such a problem that the oil constituent is mixed into the tank.

### SUMMARY OF THE INVENTION

The present invention has been implemented in view of the problem described above, and an object of the present invention is to provide a boil-off gas recovery system in which an oil constituent is hardly mixed into a tank during recovery of boil-off gas compressed by an oil supply type compressor.

A boil-off gas recovery system according to the present invention includes a tank storing liquefied gas, an oil supply type compressor for compressing boil-off gas generated by partial evaporation of the liquefied gas in the tank, and a reliquefying system for liquefying the boil-off gas compressed by the oil supply type compressor and returning the liquefied gas that has been liquefied to the tank. The reliquefying system includes a heat exchanger for oil constituent condensation for cooling down the boil-off gas to a temperature equal to or lower than a condensation temperature of an oil constituent contained in the boil-off gas, a separator for separating the oil constituent condensed by the heat exchanger for oil constituent condensation from the boil-off gas, and a reliquefying portion for liquefying the boil-off gas from which the oil constituent is separated.

In this configuration, the reliqueiying system includes the heat exchanger for oil constituent condensation for cooling down the boil-off gas to the temperature equal to or lower than the condensation temperature of the oil constituent contained in the boil-off gas, thus the oil constituent contained in the boil-off gas is condensed by the heat exchanger for oil constituent condensation. Further, the reliquefying system includes the separator for separating the oil constituent condensed by the heat exchanger for oil constituent condensation from the boil-off gas. thus the oil constituent condensed by the heat exchanger for oil constituent condensation is captured by the separator. In this manner, the oil constituent is sufficiently removed from the boil-off gas, thus the oil constituent is hardly mixed into the tank in the above-mentioned boil-off gas recovery system.

In the above-mentioned configuration, the reliquefying portion may include a heat exchanger for gas liquefaction for cooling down the boil-off gas, from which the oil constituent has been separated by the separator, to a liquefiable temperature, an expansion valve for liquefying the boil-off gas by expanding the boil-off gas cooled down by the heat exchanger for gas liquefaction, a gas-liquid separator for separating the boil-off gas, which has been liquefied at least in part by the expansion valve, into a liquid component and a gas component.

In this configuration, the boil-off gas has been already cooled down to the temperature equal to or lower than the condensation temperature of the oil constituent by the heat exchanger for oil constituent condensation before it is cooled down by the heat exchanger for gas liquefaction. This can reduce a cold amount required for liquefaction performed by the heat exchanger for gas liquefaction. As a result, the heat exchanger for gas liquefaction can be downsized.

In the above-mentioned configuration, the heat exchanges for oil constituent condensation may exchange heat between the boil-off gas sent from the tank to the oil supply type compressor and the boil-off gas that has been compressed by the oil supply type compressor.

In this configuration, the heat exchanger for oil constituent condensation cools down the boil-off gas that has been compressed by the oil supply type compressor by utilizing the boil-off gas sent from the tank to the oil supply type compressor, thus a separate cooling medium is not necessary for cooling the boil-off gas that has been compressed by the oil supply type compressor. As a result, the above-mentioned boil-off gas recovery system can be downsized.

In the above-mentioned configuration, the reliqueiying system may include a refrigerating system of a refrigerator. The heat exchanger for oil constituent condensation may be an evaporator arranged at a circulation passage through which a cooling medium circulates in the refrigerating system of the refrigerator, and the evaporator may evaporate the cooling medium in the refrigerating system and cool down the boil-off gas to the temperature equal to or lower than the condensation temperature by exchanging heat between the cooling medium and the boil-off gas that has been compressed by the oil supply type compressor.

In this configuration, the oil constituent contained in the boil-off gas can be efficiently condensed by the refrigerator. This is because the condensation temperature of the oil constituent contained in the boil-off gas is close to the cooling temperature of the refrigerator, which prevents the oil constituent from being solidified, but not being condensed.

In the above-mentioned configuration, the reliquefying system may include a temperature control means for adjusting a temperature of the boil-off gas after being cooled down by the heat exchanger for oil constituent condensation, but before the oil constituent is separated from the boil-off gas by the separator,

This configuration makes it easy to adjust the temperature of the boil-off gas cooled down by the heat exchanger for oil constituent condensation to a suitable temperature, for example, the temperature equal to or lower than the condensation temperature.

In the above-mentioned configuration, the temperature control means preferably increases the temperature of the boil-off gas after being cooled down by the heat exchanger for oil constituent condensation by merging the boil-off gas before being cooled down by the heat exchanger for oil constituent condensation to the boil-off gas after being cooled down by the heat exchanger for oil constituent condensation.

When the temperature of the boil-off gas cooled down by the heat exchanger for oil constituent condensation is reduced to a freezing point or lower of the oil constituent, the oil constituent may be solidified to clog a pipe. However, according to the above-mentioned configuration, the temperature control means increases the temperature of the boil-off gas after being cooled down by the heat exchanger for oil constituent condensation by utilizing the boil-off gas before being cooled down by the heat exchanger for oil constituent condensation, thereby preventing the clogging of the pipe caused by solidification of the oil constituent.

In the above-mentioned configuration, the temperature control means may include a bypass pipe in which a bypass passage is formed fox merging the boil-off gas before being cooled by the heat exchanger for oil constituent condensation to the boil-off gas after being cooled by the heat exchanger for oil constituent condensation, a valve arranged on the bypass pipe for adjusting an opening of the bypass passage, and an opening control portion for controlling the opening of the bypass passage.

In this configuration, the temperature control means can be achieved by a simply configuration that includes the bypass pipe, the valve, and the opening control portion.

In the above-mentioned configuration, the reliquefying system may include an oil filter for removing the oil constituent contained in the boil-off gas before being cooled down by the heat exchanger for oil constituent condensation.

In this configuration, the oil constituent in a liquid state contained in the boil-off gas is removed by the oil filter, thereby enabling to reduce a risk that a heat transfer is impaired by the oil constituent in a liquid state in the heat exchanger for oil constituent condensation. As a result, the heat exchanger for oil constituent condensation can be downsized.

According to the present invention, the oil constituent is hardly mixed into the tank when the boil-off gas compressed by the oil supply type compressor is reliquefied.

### BRIEF DESCRIPTION OF THE DRAWINGS

FIG. 1 is a schematic block diagram illustrating a boil-off gas recovery system according to a first embodiment.
FIG. 2 is a schematic block diagram illustrating a reliquefying system of the boil-off gas recovery system according to the first embodiment.
FIG. 3 is a longitudinal section view of a first separator of the boil-off gas recovery system according to the first embodiment.
FIG. 4 is a schematic block diagram illustrating a reliquefying system of a boil-off gas recovery system according to a second embodiment.
FIG. 5 is a schematic block diagram illustrating a refrigerating system of a refrigerator using an evaporator that is applied to a heat exchanger for oil constituent condensation of the boil-off gas recovery system according to the second embodiment.
FIG. 6 is a schematic block diagram illustrating a heat exchanger for oil constituent condensation of a boil-off gas recovery system according to a third embodiment.
FIG. 7 is a schematic block diagram illustrating a refrigerating system of a refrigerator using an evaporator that is applied to a heat exchanger for oil constituent condensation of a boil-off gas recovery system according to a fourth embodiment.
FIG. 8 is a schematic block diagram illustrating a boil-off gas recovery system according to a fifth embodiment.

### DESCRIPTION OF THE PREFERRED EMBODIMENTS

Hereinafter, embodiments of the present invention will be described with reference to the drawings. Note that, for convenience of explanation, the drawings referred to hereinafter show only principal constituent elements, necessary for describing the boil-off gas recovery system according to the embodiments of the present invention, in a simplified manner. Thus, the boil-off gas recovery system according to the embodiments of the present invention may include any constituent elements that are not illustrated in the drawings referred to in the present specification.

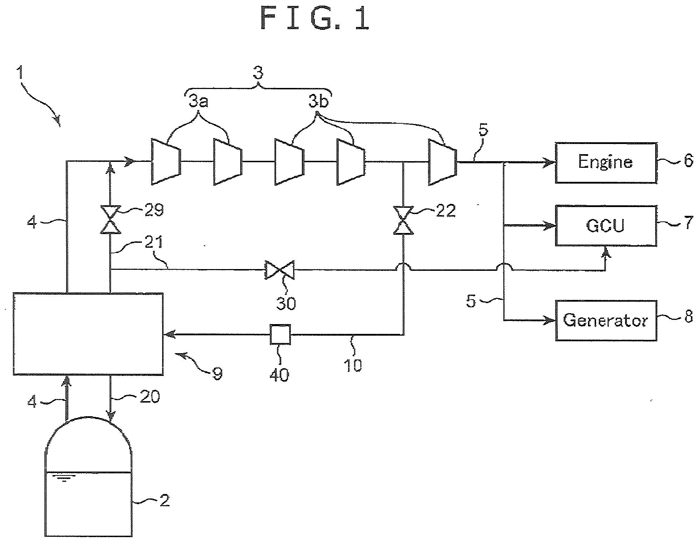

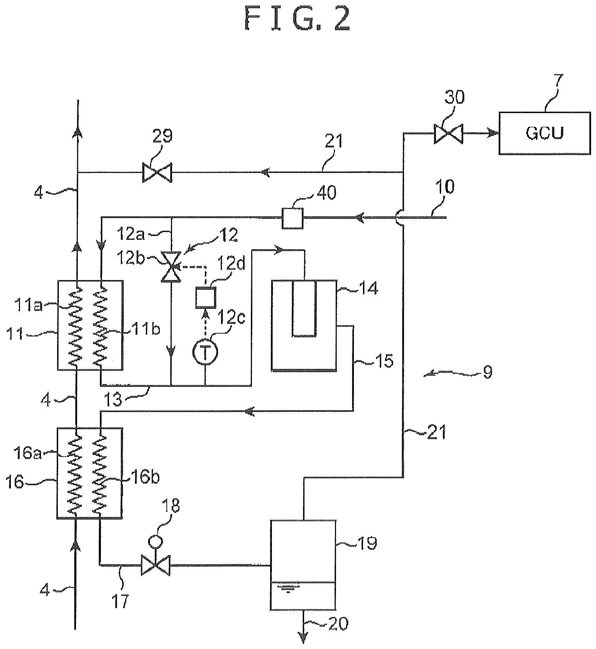

FIG. 1 is a schematic block diagram illustrating a boil-off gas recovery system 1 according to a first embodiment. FIG. 2 is a schematic block diagram illustrating a reliquefying system 9 of the boil-off gas recovery system 1 according to the first embodiment. The boil-off gas recovery system 1 is installed in a vessel that carries liquefied gas such as liquefied natural gas. The boil-off gas recovery system 1 includes a tank 2, a compressor 3, a first pipe 4, a second pipe 5, an engine 6, a gas combustion apparatus 7, a generator 8, and a reliquefying system 9.

The tank 2 stores liquefied natural gas at about -160°C. The tank 2 may store liquefied petroleum gas instead of the liquefied natural gas.

The compressor 3 with five compression stages includes non-oil supply type compressors 3a requiring no lubricating oil and oil supply type compressors 3b requiring lubricating oil. The non-oil supply type compressors 3a are arranged at a first and second stages. The oil supply type compressors 3b are arranged at a third, fourth and fifth stages. Note that the compression stages of the compressors 3 are not limited to five stages and may include any number of stages as long as the oil supply type compressor 3b is included.

The first pipe 4 connects the tank 2 and the compressors 3 via the reliquefying system 9. The first pipe 4 transfers the boil-off gas generated by evaporation of the liquefied natural gas stored in the tank 2 from the tank 2 to the compressors 3.

The second pipe 5 connects the compressors 3 and the engine 6. The second pipe 5 is branched on its way to connect the compressors 3, the gas combustion apparatus 7, and the generator 8.

The engine 6 is supplied with the boil-off gas compressed by the compressors 3 via the second pipe 5. In this configuration, the vessel can combust the boil-off gas in the engine 6 to generate a driving force.

The gas combustion apparatus 7 is an apparatus that safely treats the excess boil-off gas by combustion when the production of the boil-off gas exceeds an amount necessary as the fuel for the engine 6 and the generator 8. The gas combustion apparatus 7 is supplied with the boil-off gas compressed by the compressors 3 via the second pipe 5.

The generator 8 is supplied with the boil-off gas compressed by the compressors 3 via the second pipe 5. In this configuration, the generator 8 generates power required for driving various apparatuses of the vessel using the supplied boil-off gas as the fuel.

The reliquefying system 9 will be described with reference to FIGs 1 and 2. The reliquefying system 9 includes a third pipe 10, an oil filter 40, a heat exchanger for oil constituent condensation 11, a temperature control means 12, a fourth pipe 13, a first separator 14, a fifth pipe 15, a heat exchanger for gas liquefaction 16, a sixth pipe 17, an expansion valve 18, a gas-liquid separator 19, a seventh pipe 20, and an eighth pipe 21. A reliquefying portion is constituted by the heat exchanger for gas liquefaction 16, the expansion valve 18, and the gas-liquid separator 19.

The third pipe 10 connects a point between the oil supply type compressor 3b at the fourth stage and the oil supply type compressor 3b at the fifth stage to the heat exchanger for oil constituent condensation 11. The third pipe 10 transfers the boil-off gas compressed by the compressors 3 from the first stage to the fourth stage to the heat exchanger for oil constituent condensation 11. Note that the third pipe 10 is not limited to the one branched from the point between the compressor 3b at the fourth stage and the compressor 3b at the fifth stage, and it may be branched at any downstream location of the oil supply type compressor 3b. The boil-off gas compressed by the compressors 3 from the first stage to the fourth stage is cooled down to a temperature of, for example, 20°C to 45°C, by a gas cooler (not illustrated). The third pipe 10 is provided with a first control valve 22. The first control valve 22 can adjust an opening of the passage of the third pipe 10. The first control valve 22 adjusts flow rates of the boil-off gas compressed by the compressors 3 flowing into the second pipe 5 and the third pipe 10 between the second pipe 5 and the third pipe 10. The third pipe 10 is provided with an oil filter 40. The oil filter 40 removes the oil constituent in a liquid state contained in the boil-off gas compressed by the compressors 3.

The heat exchanger for oil constituent condensation 11 cools down the boil-off gas compressed by the compressors 3 to a condensation temperature (e.g., 0°C) of the oil constituent contained in the boil-off gas. The heat exchanger for oil constituent condensation 11 may cool down the boil-off gas to the condensation temperature (e.g., 0°C) of the oil constituent or lower. The cooling temperature of the boil-off gas by the heat exchanger for oil constituent condensation 11 is appropriately set according to the lubricating oil used in the oil supply type compressors 3b. The heat exchanger for oil constituent condensation 11 includes a low temperature side passage 11a through which the boil-off gas sent from the tank 2 to the compressors 3 passes and a high temperature side passage 11b through which the boil-off gas compressed by the compressors 3 passes. The heat exchanger for oil constituent condensation 11 exchanges heat between the boil-off gas sent from the tank 2 to the compressors 3 and the boil-off gas compressed by the compressors 3. In this process, the oil constituent contained in the boil-off gas is condensed. The boil-off gas passing through the low temperature side passage 11a is heated, for example, from -50°C to 20°C. The low temperature side passage 11a is connected to the first pipe 4. An inlet of the high temperature side passage 11b is connected to the third pipe 10. An outlet of the high temperature side passage 11b is connected to the fourth pipe 13.

The temperature control means 12 adjusts a temperature of the boil-off gas that has been cooled down by passing through the high temperature side passage 11b of the heat exchanger for oil constituent condensation 11 to a set temperature. The set temperature may be set, for example, to be equal to or lower than the condensation temperature (e.g., 0°C) of the oil constituent contained in the boil-off gas, and higher than a solidification temperature (e.g., -25°C) of the oil constituent. The temperature control means 12 includes a bypass pipe 12a connecting the third pipe 10 and the fourth pipe 13, a second control valve 12b arranged on the bypass pipe 12a, a temperature sensor 12c arranged on the fourth pipe 13, and a control portion 12d controlling the second control valve 12b. The temperature sensor 12c and the control portion 12d constitute an opening control portion.

The bypass pipe 12a in which a bypass passage is formed merges the boil-off gas before being cooled down by the heat exchanger for oil constituent condensation 11 to the boil-off gas after being cooled by the heat exchanger for oil constituent condensation 11. The second control valve 12b can adjust an opening of the bypass passage. The second control valve 12b adjusts a flow rate of the boil-off gas compressed by the compressors 3 flowing into the bypass pipe 12a. The temperature sensor 12c detect a temperature of the boil-off gas flowing through the fourth pipe 13 and sends a signal corresponding to the temperature to the control portion 12d. The control portion 12d sends a signal for controlling the opening of the bypass passage based on the signal from the temperature sensor 12c to the second control valve 12b. For example, when the control portion 12d determines that the temperature of the boil-off gas that has been cooled down by the heat exchanger for oil constituent condensation 11 becomes lower than the set temperature based on the signal from the temperature sensor 12c, the control portion 12d sends an operation command for opening the bypass passage to the second control valve 12b. The second control valve 12b opens the bypass passage upon receipt of the operation command. In this manner, the boil-off gas before being cooled down by the heat exchanger for oil constituent condensation 11 flows through the bypass passage and merges to the boil-off gas after being cooled down by the heat exchanger for oil constituent condensation 11. As a result, the temperature of the boil-off gas after being cooled by the heat exchanger for oil constituent condensation 11 increases, thereby preventing the clogging of the fourth pipe 13 caused by the solidification of the oil constituent.

Conversely, when the control portion 12d determines that the temperature of the boil-off gas that has been cooled down by the heat exchanger for oil constituent condensation 11 becomes higher than the set temperature (e.g., 0°C) based on the signal from the temperature sensor 12c, the control portion 12d sends an operation command for closing the bypass passage to the second control valve 12b. The second control valve 12b closes the bypass passage upon receipt of the operation command. In this manner, the boil-off gas before being cooled down by the heat exchanger for oil constituent condensation 11 is prevented from flowing through the bypass passage and the whole amount of such boil-off gas is cooled down by the heat exchanger for oil constituent condensation 11, thus the temperature of the boil-off gas after being cooled down by the heat exchanger for oil constituent condensation 11 decreases. In this manner, the temperature control means 12 adjusts the temperature of the boil-off gas after being cooled down by the heat exchanger for oil constituent condensation 11 to the set temperature (e.g., 0°C).

The fourth pipe 13 connects the heat exchanger for oil constituent condensation 11 and the first separator 14. The fourth pipe 13 transfers the boil-off gas cooled down to the set temperature (e.g., 0°C) by the heat exchanger for oil constituent condensation 11 to the first separator 14.

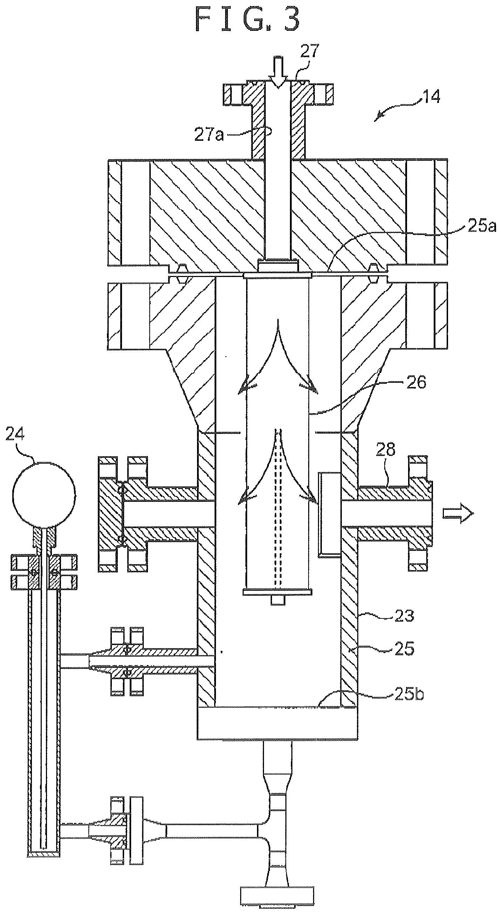

FIG. 3 is a longitudinal section view of the first separator 14 of the exemplary boil-off gas recovery system 1. The first separator 14 includes a capturing portion 23 for capturing the oil constituent and a level sensor 24 for detecting a capture amount of the oil constituent.

The capturing portion 23 includes a main body portion 25 of a cylindrical shape with both ends closed, a small-diameter portion 26 of a cylindrical shape with a diameter smaller than the main body portion 25, a gas inlet pipe 27 for allowing the boil-off gas to flow into the small-diameter portion 26, and a gas outlet pipe 28 for flowing out the boil off gas to an outside. The small-diameter portion 26 is arranged coaxially with the main body portion 25 in the main body portion 25 and installed on a lower surface of an upper end portion 25a of the main body portion 25. An outer surface of the small-diameter portion 26 is constituted by a mesh. Thus, the boil-off gas and the oil constituent condensed by the heat exchanger for oil constituent condensation 11 can pass through the mesh. The gas inlet pipe 27 is installed on an upper surface of the upper end portion 25a of the main body portion 25. The gas inlet pipe 27 is connected to the fourth pipe 13. The gas inlet pipe 27 forms an inlet side passage 27a through which the boil-off gas passes. The inlet side passage 27a communicates with an inside of the small-diameter portion 26. The gas outlet pipe 28 is arranged on a side surface of the main body portion 25. The gas outlet pipe 28 is connected to the fifth pipe 15. In this configuration, the boil-off gas having passed through the mesh has a specific gravity smaller than that of the air, thus it passes through the inside of the main body portion 25 and flows out to the fifth pipe 15 via the gas outlet pipe 28. On the other hand, the oil constituent in a liquid state having passed through the mesh has a specific gravity larger than that of the air, thus it is accumulated on a bottom 25b of the main body portion 25. In this manner, the capturing portion 23 separates the oil constituent condensed by the heat exchanger for oil constituent condensation 11 from the boil-off gas.

The level sensor 24 determines whether a liquid level of the oil constituent accumulated on the bottom 25b of the main body portion 25 exceeds a predetermined value. When the level sensor 24 determines that the liquid level of the oil constituent accumulated on the bottom 25b of the main body portion 25 exceeds the predetermined value, the level sensor 24 can sound an alarm to notify a worker that the first separator 14 requires a maintenance inspection. Note that the first separator 14 is not limited as long as it can separate the oil constituent condensed by the heat exchanger for oil constituent condensation 11 from the boil-off gas. The first separator 14 may be, for example, an activated carbon filter.

With reference to FIG. 2, the fifth pipe 15 connects the gas outlet pipe 28 of the first separator 14 and the heat exchanger for gas liquefaction 16. The fifth pipe 15 transfers the boil-off gas from which the oil constituent is separated by the first separator 14 to the heat exchanger for gas liquefaction 16.

The heat exchanger for gas liquefaction 16 cools down the boil-off gas from which the oil constituent is separated by the first separator 14 to a liquefiable temperature (e.g., -100°C) using the expansion valve 18. The heat exchanger for gas liquefaction 16 includes a low temperature side passage 16a through which the boil-off gas sent from the tank 2 to the compressors 3 passes and a high temperature side passage 16b through which the boil-off gas from which the oil constituent is separated by the first separator 14 passes. The heat exchanger for gas liquefaction 16 exchanges heat between the boil-off gas sent from the tank 2 to the compressors 3 and the boil-off gas from which the oil constituent is separated by the first separator 14. In this process, the boil-off gas passing through the low temperature side passage 16a is heated, for example, from -160°C to -50°C. The low temperature side passage 16a is connected to the first pipe 4. An inlet of the high temperature side passage 16b is connected to the fifth pipe 15. An outlet of the high temperature side passage 16b is connected to the sixth pipe 17.

The sixth pipe 17 connects the heat exchanger for gas liquefaction 16 and the gas-liquid separator 19. The sixth pipe 17 transfers the boil-off gas cooled down by the heat exchanger for gas liquefaction 16 to the gas-liquid separator 19.

The expansion valve 18 is arranged on the sixth pipe 17. The expansion valve 18 expands the boil-off gas cooled down by the heat exchanger for gas liquefaction 16 to reduce its pressure. In this process, a boiling point of the boil-off gas decreases and at least a part of the boil-off gas is liquefied. As a result, the boil-off gas is turned into a gas-liquid two phase state.

The gas-liquid separator 19 separates the boil-off gas, which is turned into the gas-liquid two phase state by the expansion valve 18, into a liquid component and a gas component. The gas-liquid separator 19 is connected to the seventh pipe 20 and the eighth pipe 21.

The seventh pipe 20 connects the gas-liquid separator 19 and the tank 2. The seventh pipe 20 transfers the liquid component of the boil-off gas separated by the gas-liquid separator 19 to the tank 2. In this manner, the boil-off gas generated in the tank 2 is returned to the tank 2 as the liquid component.

The eighth pipe 21 connects the gas-liquid separator 19 and the first pipe 4. The eighth pipe 21 further connects the gas-liquid separator 19 and the gas combustion apparatus 7. The eighth pipe 21 transfers the gas component of the boil-off gas separated by the gas-liquid separator 19 to the first pipe 4 and the gas combustion apparatus 7. The eighth pipe 21 is provided with a third control valve 29 and a fourth control valve 30. The third control valve 29 and the fourth control valve 30 can adjust openings of passages of the boil-off gas. This configuration enables to adjust flow rates of the boil-off gas flowing into the first pipe 4 and the gas combustion apparatus 7.

According to the boil-off gas recovery system 1 of the first embodiment, the boil-off gas is compressed by the oil supply type compressors 3b, thus the boil-off gas contains the oil constituent of the lubricating oil from the oil supply type compressors 3b.

However, the oil constituent contained in the boil-off gas is condensed by being cooled down to the set temperature (e.g., 0°C) by the heat exchanger for oil constituent condensation 11 and separated from the boil-off gas by the first separator 14. Thus, the oil constituent is hardly mixed into the tank 2 in the boil-off gas recovery system 1.

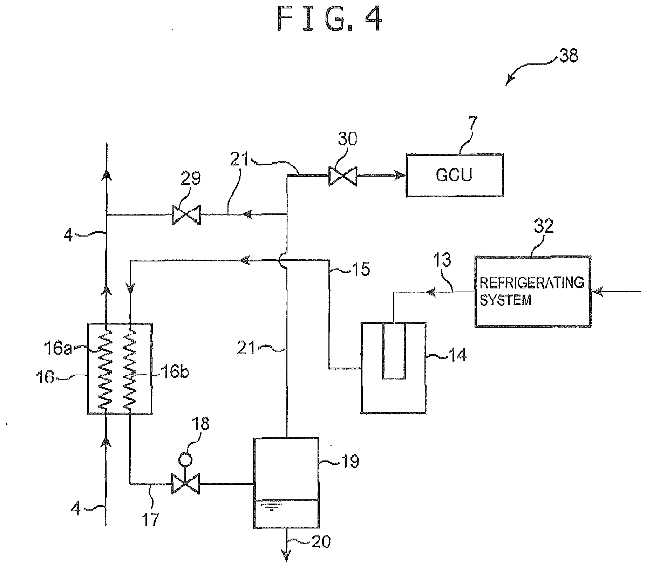

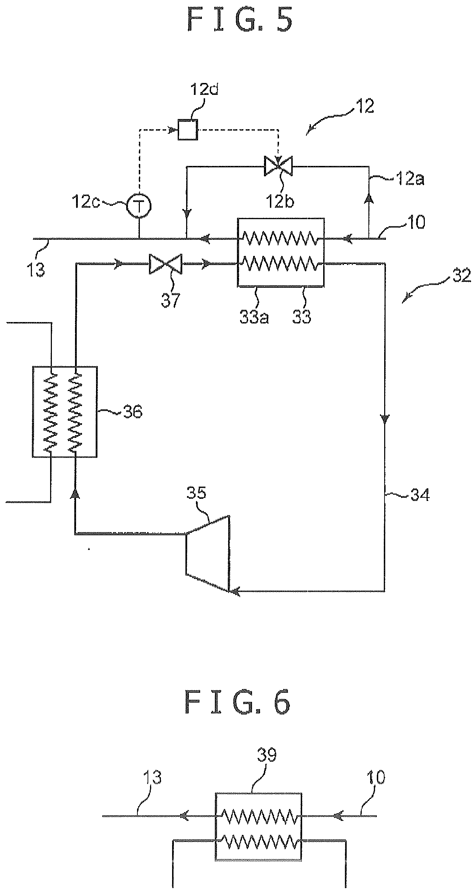

FIG. 4 is a schematic block diagram illustrating an exemplary reliquefying system 38 of a boil-off gas recovery system according to a second embodiment. FIG. 5 is a schematic block diagram illustrating a refrigerating system 32 of a refrigerator using an evaporator 33a that is applied to a heat exchanger for oil constituent condensation 33 of the boil-off gas recovery system according to the second embodiment. The boil-off gas recovery system of the second embodiment is different from the heat exchanger for oil constituent condensation 11 of the first embodiment in that the evaporator 33a in the refrigerating system 32 of the refrigerator is used as the heat exchanger for oil constituent condensation 33 for cooling down the boil-off gas compressed by the compressors 3 to the set temperature (e.g., 0°C). In other respects, the boil-off gas recovery system of the second embodiment has the same configurations as that of the first embodiment. The same configurations as used in the first embodiment are designated by the same reference signs as used in the first embodiment and description thereof is omitted.

The reliqueiying system 38 includes the refrigerating system 32 of the refrigerator. The heat exchanger for oil constituent condensation 33 is the evaporator 33a that is arranged on a circulation passage 34, through which a cooling medium is circulated, in the refrigerating system 32 of the refrigerator.

The refrigerating system 32 of the refrigerator includes a compressor 35 for compressing the cooling medium flowing through the circulation passage 34, a condenser 36 for exchanging heat between the cooling medium and an exhaust heat-treated medium such as outside air and cooling water, an expansion valve 37 for expanding the cooling medium liquefied by the condenser 36, and the evaporator 33a for exchanging heat between the liquefied cooling medium expanded by the expansion valve 37 and the boil-off gas compressed by the compressors 3.

The evaporator 33a evaporates the liquefied cooling medium by exchanging heat between the liquefied cooling medium expanded by the expansion valve 37 and the boil-off gas compressed by the compressors 3. In this process, the boil-off gas is deprived of heat by the cooling medium and thus cooled down to the set temperature (e.g., 0°C) to condense the oil constituent contained in the boil-off gas. A cooling temperature of the boil-off gas in the evaporator 33a is adjusted to the set temperature (e.g., 0°C) by adjusting a rotation speed of a pump for circulating the cooling medium (not illustrated) and a rotation speed of the compressor 35, by employing the temperature control means 12 similar to the one used in the first embodiment, or the like.

In the boil-off gas cooled down to the set temperature (e.g., 0°C) by the evaporator 33a, the condensed oil constituent is separated from the boil-off gas by the first separator 14 in the same manner as in the first embodiment.

FIG. 6 is a schematic block diagram illustrating a heat exchanger for oil constituent condensation 39 of a boil-off gas recovery system according to a third embodiment. In the boil-off gas recovery system according to the third embodiment, the heat exchanger for oil constituent condensation 39 for cooling down the boil-off gas compressed by the compressors 3 to the set temperature (e.g., 0°C) is different from the heat exchanger for oil constituent condensation 11 of the first embodiment. In other configurations, the boil-off gas recovery system according to the third embodiment has the same configurations as that of the first embodiment. The same configurations as used in the first embodiment are designated by the same reference signs as used in the first embodiment and description thereof is omitted. In the heat exchanger for oil constituent condensation 11 of the first embodiment, the boil-off gas transferred from the tank 2 to the compressors 3 is used as the cooling medium for cooling down the boil-off gas compressed by the compressors 3. On the other hand, in the heat exchanger for oil constituent condensation 39 of the third embodiment, the cooing water is used as a medium for cooling down the boil-off gas compressed by the compressors 3. Thus, the boil-off gas recovery system of the third embodiment is configured in a very simple manner.

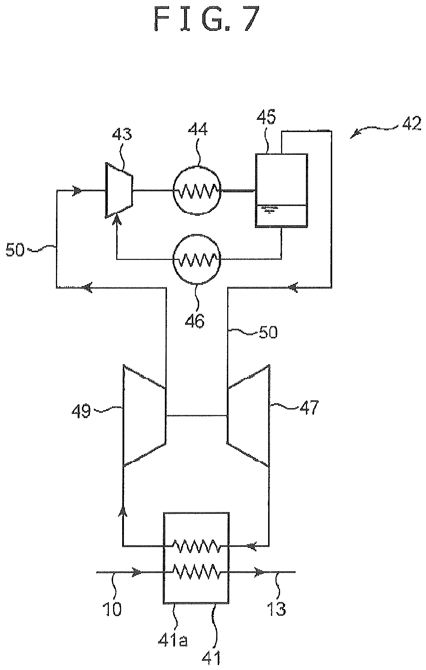

FIG. 7 is a schematic block diagram illustrating a refrigerating system 42 of a refrigerator using an evaporator 41a, which is applied to a heat exchanger for oil constituent condensation 41 of a boil-off gas recovery system according to a fourth embodiment. In the boil-off gas recovery system according to the fourth embodiment, the heat exchanger for oil constituent condensation 41 for cooling down the boil-off gas compressed by the compressors 3 to the set temperature (e.g., 0°C) is different from the heat exchanger for oil constituent condensation 11 of the first embodiment. In other configurations, the boil-off gas recovery system according to the fourth embodiment has the same configurations as that of the first embodiment. The same configurations as used in the first embodiment are designated by the same reference signs as used in the first embodiment and description thereof is omitted. The heat exchanger for oil constituent condancation 41 of the boil-off gas recovery system according to the fourth embodiment is applied with the evaporator 41a of the refrigerating system 42, which is a modification of the refrigerating system 32 of the second embodiment (see FIG. 5).

The refrigerating system 42 includes a compressor 43, a gas cooler 44, a second separator 45, an oil cooler 46, an expansion valve 47, an evaporator 41a, and a deflation valve 49. The compressor 43, the gas cooler 44, the second separator 45, the expansion valve 47, the evaporator 41a, and the deflation valve 49 are arranged in this order on a circulation passage 50 of a cooling medium.

The compressor 43 compresses the cooling medium flowing through the circulation passage 50. The gas cooler 44 cools down the cooling medium compressed by the compressor 43. The second separator 45 separates the cooling medium into a liquid component and a gas component. The liquid component of the cooling medium is cooled down by the oil cooler 46 and returned to the compressor 43. The expansion valve 47 expands the gas component of the cooling medium for liquefaction. The evaporator 41a exchanges heat between the cooling medium liquefied by the expansion valve 47 and the boil-off gas compressed by the compressors 3 to evaporates the liquefied cooling medium and condense the oil constituent contained in the boil-off gas. The evaporator 41a has the same function as the evaporator 33a of the second embodiment (see FIG. 5). The deflation valve 49 deflates the cooling medium evaporated by the evaporator 41a.

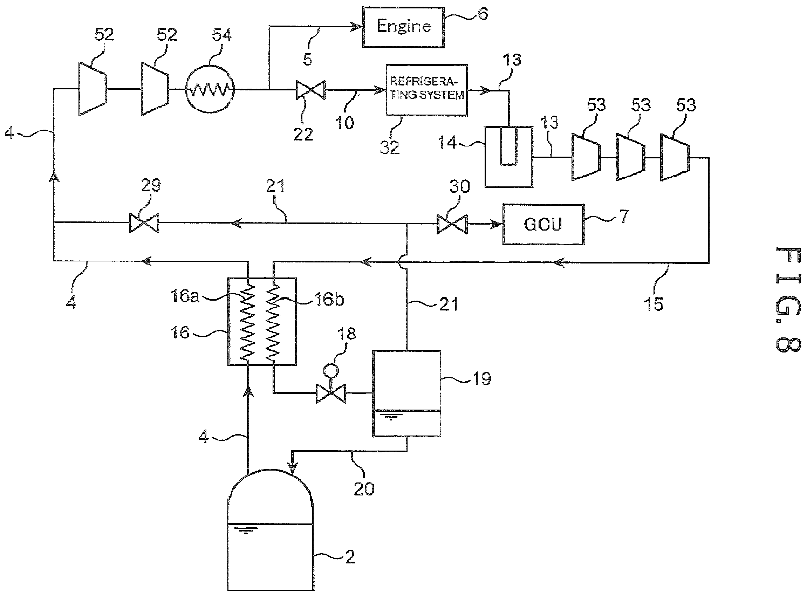

FIG. 8 is a schematic block diagram illustrating a boil-off gas recovery system 51 according to a fifth embodiment. The boil-off gas recovery system 51 according to the fifth embodiment is different from those of the first and second embodiments in that oil supply type compressors 52 are arranged at a first and second stages and that a reliquefying system 55 includes non-oil supply type compressors 53. In other respects, the boil-off gas recovery system 51 of the fifth embodiment has the same configurations as those of the first and second embodiments, The same configurations as used in the first and second embodiments are designated by the same reference signs as used in the first and second embodiments and description thereof is omitted.

The boil-off gas recovery system 51 according to the fifth embodiment includes the oil supply type compressors 52 at two stages instead of the compressors 3 of the first embodiment, The boil-off gas recovery system 51 according to the fifth embodiment further includes a gas cooler 54 for cooling down the boil-off gas compressed by the oil supply type compressors 52, in addition to the configurations of the first embodiment. The oil supply type compressor 52 at the first stage is connected to the first pipe 4. The oil supply type compressor 52 at the second stage is connected to the third pipe 10.

A reliquefying system 55 of the fifth embodiment is constituted by adding the non-oil supply type compressors 53 at three stages to the reliquefying system 38 of the second embodiment (see FIG. 5). The non-oil supply type compressors 53 at three stages are arranged between the first separator 14 and the heat exchanger for gas liquefaction 16. The non-oil supply type compressors 53 at three stages are provided to increase efficiency of reliquefaction of the boil-off gas by the expansion valve 18.

In the boil off gas recovery system 51 of the fifth embodiment, the oil constituent contained in the boil-off gas is separated by the first separator 14 in the same manner as in the first embodiment, thus the oil constituent is hardly mixed into the tank 2.

The temperature control means 12 of the first embodiment described above is arranged on the third pipe 10, however, it may be arranged on the first pipe 4 or on both of the third pipe 10 and the first pipe 4. Note that constituent elements having the same functions as the temperature control means 12 of the first embodiment described above are designated by the same reference signs as used in the first embodiment described above and description thereof is simplified. The temperature control means 12 of this modification includes the bypass pipe 12a that connects a point between the heat exchanger for gas liquefaction 16 and the heat exchanger for oil constituent condensation 11 of the first pipe 4, and a downstream side of the heat exchanger for oil constituent condensation 11 of the first pipe 4, the second control valve 12b arranged on the bypass pipe 12a, the temperature sensor 12c arranged at a downstream side of the heat exchanger for oil constituent condensation 11 of the first pipe 4, and the control portion 12d controlling the second control valve 12b.

The temperature control means 12 of the modification adjusts a temperature of the boil-off gas that has been heated by passing through the low temperature side passage 11a of the heat exchanger for oil constituent condensation 11 to a set temperature (e.g., 20°C). The temperature control means 12 of the modification adjusts the temperature of the boil-off gas in the same manner as in the first embodiment described above. Specifically, when the temperature of the boil-off gas that has been heated by passing through the low temperature side passage 11a of the heat exchanger for oil constituent condensation 11 becomes higher than the set temperature, the temperature control means 12 of the modification opens the second control valve 12b to merge the boil-off gas before being heated by passing through the low temperature side passage 11a of the heat exchanger for oil constituent condensation 11 to the boil-off gas that has been heated by passing through the low temperature side passage 11a of the heat exchanger for oil constituent condensation 11. This lowers the temperature of the boil-off gas that has been heated by passing through the low temperature side passage 11a of the heat exchanger for oil constituent condensation 11.

Conversely, when the temperature of the boil-off gas that has been heated by passing through the low temperature side passage 11a of the heat exchanger for oil constituent condensation 11 becomes lower than the set temperature, the temperature control means 12 of the modification closes the second control valve 12b. In this manner, the temperature control means 12 of the modification adjusts the temperature of the boil-off gas after been heated by passing through the low temperature side passage 11a of the heat exchanger for oil constituent condensation 11 to the set temperature (e.g., 20°C).

The temperature control means 12 of the modification adjusts in advance the temperature of the boil-off gas after been heated by passing through the low temperature side passage 11a of the heat exchanger for oil constituent condensation 11 to the set temperature (e.g., 20°C), thereby making constant a temperature of the boil-off gas that has been compressed by the compressors 3 and flows into the high temperature side passage 11b of the heat exchanger for oil constituent condensation 11. In this manner, the oil constituent contained in the boil-off gas compressed by the compressors 3 can be effectively condensed by the heat exchanger for oil constituent condensation 11.

A boil-off gas recovery system 1 includes a tank 2 storing liquefied gas, an oil supply type compressor 3b for compressing boil-off gas generated by partial evaporation of the liquefied gas in the tank 2, and a reliquefying system 9 for liquefying the boil-off gas compressed by the oil supply type compressor 3b and returning the liquefied gas that has been liquefied to the tank 2. The reliquefying system 9 includes a heat exchanger for oil constituent condensation 11 for cooling down the boil-off gas to a temperature equal to or lower than a condensation temperature of an oil constituent contained in the boil-off gas, a separator 14 for separating the oil constituent condensed by the heat exchanger for oil constituent condensation 11 from the boil-off gas, and a reliquefying portion for liquefying the boil-off gas from which the oil constituent is separated.

## Claims

1. A boil-off gas recovery system comprising:
a tank storing liquefied gas;
an oil supply type compressor for compressing boil-off gas generated by partial evaporation of the liquefied gas in the tank; and
a reliquefying system for liquefying the boil-off gas compressed by the oil supply type compressor and returning the liquefied gas that has been liquefied to the tank,
wherein the reliquefying system includes a heat exchanger for oil constituent condensation for cooling down the boil-off gas to a temperature equal to or lower than a condensation temperature of an oil constituent contained in the boil-off gas, a separator for separating the oil constituent condensed by the heat exchanger for oil constituent condensation from the boil-off gas, and a reliquefying portion for liquefying the boil-off gas from which the oil constituent is separated.

2. The boil-off gas recovery system according to claim 1, wherein the reliquefying portion includes a heat exchanger for gas liquefaction for cooling down the boil-off gas, from which the oil constituent has been separated by the separator, to a liquefiable temperature, an expansion valve for liquefying the boil-off gas by reducing a pressure of the boil-off gas that has been cooled down by the heat exchanger for gas liquefaction, and a gas-liquid separator for separating the boil-off gas, which has been liquefied at least in part by the expansion valve, into a liquid component and a gas component.

3. The boil-off gas recovery system according to claim 2, wherein the heat exchanger for oil constituent condensation exchanges heat between the boil-off gas sent from the tank to the oil supply type compressor and the boil-off gas that has been compressed by the oil supply type compressor.

4. The boil-off gas recovery system according to claim 2, wherein:
the reliquefying system includes a refrigerating system of a refrigerator;
the heat exchanger for oil constituent condensation is an evaporator arranged at a circulation passage through which a cooling medium circulates in the refrigerating system of the refrigerator; and
the evaporator evaporates the cooling medium in the refrigerating system and cools down the boil-off gas to the temperature equal to or lower than the condensation temperature by exchanging heat between the cooling medium and the boil-off gas that has been compressed by the oil supply type compressor.

5. The boil-off gas recovery system according to any of claims 3 or 4, wherein the reliquefying system includes a temperature control means for adjusting a temperature of the boil-off gas after being cooled down by the heat exchanger for oil constituent condensation, but before the oil constituent is separated from the boil-off gas by the separator.

6. The boil-off gas recovery system according to claim 5, wherein the temperature control means increases the temperature of the boil-off gas after being cooled down by the heat exchanger for oil constituent condensation by merging the boil-off gas before being cooled down by the heat exchanger for oil constituent condensation to the boil-off gas after being cooled down by the heat exchanger for oil constituent condensation.

7. The boil-off gas recovery system according to claim 6, wherein the temperature control means includes a bypass pipe in which a bypass passage is formed for merging the boil-off gas before being cooled down by the heat exchanger for oil constituent condensation to the boil-off gas after being cooled down by the heat exchanger for oil constituent condensation, a valve arranged at the bypass pipe for adjusting an opening of the bypass passage, and an opening control portion for controlling the opening of the bypass passage.

8. The boil-off gas recovery system according to any of claims 1, wherein the reliquefying system includes an oil filter for removing the oil constituent contained in the boil-off gas before being cooled down by the heat exchanger for oil constituent condensation.
